# EUROPÄISCHE PATENTSCHRIFT

(11) **EP 1 590 227 B1**
(45) Veröffentlichungstag und Bekanntmachung des Hinweises auf die Patenterteilung: **20.12.2006**
(21) Anmeldenummer: 03772205.5
(22) Anmeldetag: 13.10.2003
(51) Int. Cl.: B62D 5/24, B62D 7/20, B62D 3/08

(54) **LENKUNG**
STEERING SYSTEM
SYSTEME DE DIRECTION

(30) Priorität: 04.02.2003 DE 10304520
(43) Veröffentlichungstag der Anmeldung: 02.11.2005
(73) Patentinhaber: ThyssenKrupp Presta SteerTec GmbH, 40476 Düsseldorf (DE)
(72) Erfinder: HORWATH, Jochen, 72669 Unterensingen (DE)
(74) Vertreter: LENZING GERBER
(86) Internationale Anmeldenummer: PCT/EP2003/011305
(87) Internationale Veröffentlichungsnummer: WO 2004/069632

(56) Entgegenhaltungen:
- EP-A- 1 010 604
- DE-A- 4 103 067
- US-A- 2 496 369
- US-A- 3 918 544

## Beschreibung

Die vorliegende Erfindung betrifft eine Lenkung für ein Kraftfahrzeug, insbesondere für ein Nutzkraftfahrzeug.

Aus der deutschen Auslegeschrift 22 14 577 (DT 22 14 577 B2) ist eine Zahnstangenlenkung für Fahrzeuge bekannt, wobei sich eine Zahnstange durch ein Ritzelgehäuse erstreckt, in dem ein mit dem Lenkrad verbundenes Ritzel angeordnet ist, welches mit der Verzahnung der Zahnstange in Eingriff steht. Durch Drehen des Lenkrads wird eine lineare Bewegung der Zahnstange herbeigeführt, an deren beiden Enden Spurstangen über Axialkugelgelenke befestigt sind.

Bei Vorderachslasten von mehr als 4 t, insbesondere im Nutzkraftfahrzeugbereich, wird aufgrund gesetzlicher Bestimmungen (EWG 70/311 und § 38 StVZO) eine sehr hohe Übersetzung für das aus dem Ritzel und der Zahnstange gebildeten Lenkgetriebe gefordert, wobei das Ritzel derart klein ausgebildet werden muss, dass dessen mechanische Haltbarkeit nicht mehr gewährleistet werden kann.

US-A-3 918 544 offenbart eine Lenkung nach dem Oberbegriff in Anspruch 1.

Ausgehend von diesem Stand der Technik liegt der Erfindung die Aufgabe zugrunde, eine Lenkung für ein Kraftfahrzeug, insbesondere für ein Nutzkraftfahrzeug zu schaffen, bei der eine hohe Übersetzung bei gleichzeitiger hoher mechanischer Haltbarkeit realisiert werden kann.

Diese Aufgabe wird erfindungsgemäß mit einer Lenkung für ein Kraftfahrzeug, insbesondere für ein Nutzkraftfahrzeug, mit den Merkmalen nach Anspruch 1, gelöst. Bevorzugte Weiterbildungen sind in den Unteransprüchen beschrieben.

Die erfindungsgemäße Lenkung bzw. der erfindungsgemäße Achssteller weist eine drehbar am Fahrzeugrahmen gelagerte Welle, einen mit der Welle verbundenen und entlang dieser bewegbaren Schlitten und zwei an dem Schlitten befestigte und sich bis zu den beiden Rädern einer Achse erstreckende Spurstangen auf, wobei der Schlitten mit der Welle über einen Gewindetrieb verbunden ist, und ist dadurch gekennzeichnet, dass der Schlitten von einer zu der Welle parallelen und an dem Fahrzeugrahmen befestigten Stange durchgriffen und entlang dieser bewegbar ist.

Da anstelle eines aus Zahnstange und Ritzel gebildeten Lineartriebs ein Gewindetrieb verwendet wird, ist eine sehr hohe Übersetzung bei gleichzeitig großer wirksamer Berührungs- bzw. Anlagefläche zum Übertragen der Kräfte bzw. der Bewegungen im Lenkgetriebe möglich. Somit kann aber die an den Anlageflächen auftretende Flächenpressung bei einem Gewindetrieb gegenüber einem Zahnstangentrieb reduziert werden, was zu einer erhöhten mechanischen Haltbarkeit des Gewindetriebs führt.

Der Gewindetrieb kann als Spindeltrieb ausgebildet sein, wobei ein am Außenumfang der Welle gebildetes Gewinde mit einem in einer Bohrung des Schlittens ausgebildeten Gewinde in Eingriff steht. Bevorzugt ist der Gewindetrieb aber als Kugelgewindetrieb bzw. Kugelumlauftrieb ausgebildet, wobei in der Bohrung des Schlittens angeordnete Kugeln in eine am Umfang der Welle ausgebildete Spiralnut eingreifen. Durch eine derartige Anordnung kann die im Gewindetrieb auftretende Reibung erheblich reduziert werden.

In Kraftfahrzeugen ist eine mit dem Lenkrad verbundene Lenkwelle regelmäßig nicht parallel sondern insbesondere senkrecht zur Radachse angeordnet. Die drehbar gelagerte Welle gemäß der Erfindung verläuft aber vorteilhaft parallel zu dieser Achse, so dass die Lenkwelle bevorzugt über ein Umlenkgetriebe mit der drehbar am Fahrzeugrahmen gelagerten Welle verbunden ist. Da die Übersetzung der Lenkung z. B. über die Steigung des an der Welle ausgebildeten Gewindes bzw. der an der Welle ausgebildeten Spiralnut in weiten Bereichen eingestellt werden kann, weist das Umlenkgetriebe bevorzugt eine Übersetzung von 1 auf. Selbstverständlich ist es aber auch möglich, das Umlenkgetriebe mit einer Übersetzung ungleich 1 auszubilden, wenn besondere Anforderungen im Kraftfahrzeug dies wünschenswert erscheinen lassen.

Die Spurstangen können an den den Rädern zugewandten Enden des Schlittens befestigt sein. Bevorzugt sind die Spurstangen jedoch mittig an dem Schlitten angebunden, so dass eine große Spurstangenlänge erzielt werden kann, welche aus fahrzeugkinematischer Sicht vorteilhaft ist. Der Ausdruck "mittig" bezieht sich hierbei auf die Längserstreckung in Bewegungsrichtung des Schlittens.

Um die Handhabung der erfindungsgemäßen Lenkung zu erleichtern, kann diese mit einer hydraulischen Kraftunterstützung ausgestattet sein, welche die vom Fahrer zum Lenken der Räder aufgebrachte Kraft verstärkt. Die hydraulische Kraftunterstützung kann dabei über eine bei Servolenkungen übliche Ventileinheit umgesetzt werden, welche an einer beliebigen Stelle des Übertragungsweges für die Lenkbewegungen angeordnet sein kann.

Der Schlitten ist bevorzugt mit einer zu der Welle parallelen und an dem Fahrzeugaufbau befestigten Stange verbunden, entlang welcher der Schlitten bewegt werden kann. Hierdurch kann die Stabilität der erfindungsgemäßen Lenkung weiter erhöht werden, da über die Welle und die Stange eine Doppelführung für den Schlitten erzielt wird.

An der Stange kann ein Zylinder ausgebildet sein, der in einer in den Schlitten ausgebildeten und an beiden Stirnseiten verschlossenen Zylinderbohrung sitzt. Der einen größeren Durchmesser als die Stange aufweisende Zylinder schließt dabei mit den beiden Stirnseiten jeweils einen Raum ein, der als hydraulischer Arbeitsraum für die hydraulische Kraftunterstützung verwendet werden kann. Dafür sind lediglich Zuleitungen zu den Arbeitsräumen erforderlich, durch welche in Abhängigkeit von einer Lenkbewegung Hydraulikflüssigkeit in die Arbeitsräume einbringbar oder aus diesen abführbar ist. Die Zuleitungen können in dem Schlitten vorgesehen sein. Bevorzugt sind die Zuleitungen aber in der Stange ausgebildet, da diese ortsfest zum Fahrzeugaufbau angeordnet ist und somit keine Hydraulikleitung über ein bewegliches Teil bzw. zu einem beweglichen Teil geführt werden muss. Gemäß dieser Weiterbildung ist der Zylinder relativ zum Fahrzeugaufbau unbeweglich, wobei durch ein Bewegen des Schlittens die

Arbeitsräume verkleinert oder vergrößert werden können.

Die Funktionsweise der erfindungsgemäßen Lenkung ist derart, dass eine auf die am Fahrzeugrahmen drehbar gelagerte Welle übertragene Drehbewegung mit einem Übersetzungsfaktor in eine Linearbewegung des Schlittens umgesetzt wird, welcher über die Spurstangen den Lenkeinschlag der Räder steuert.

Die Erfindung wird nachfolgend anhand einer bevorzugten Ausführungsform unter Bezugnahme auf die Zeichnung beschrieben. In der Zeichnung zeigen:
- Fig. 1: eine schematische Ansicht einer Ausführungsform der erfindungsgemäßen Lenkung für ein Kraftfahrzeug,
- Fig. 2: eine vergrößerte Teildarstellung der drehbar am Fahrzeugrahmen gelagerten Welle und
- Fig. 3: eine schematische Darstellung der hydraulischen Kraftunterstützung.

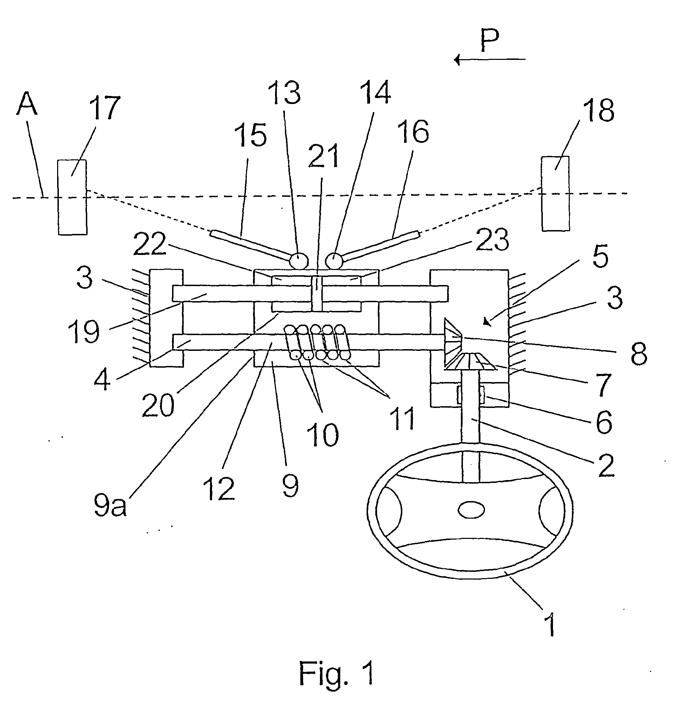

Aus Fig. 1 ist ein Lenkrad 1 ersichtlich, welches über eine Lenkwelle 2 mit einer drehbar am Fahrzeugrahmen 3 gelagerten Welle 4 über ein Umlenkgetriebe 5 verbunden ist. Die Lenkwelle 2 ist über ein Lager 6 am Fahrzeugrahmen 3 drehbar gelagert und weist an ihrem dem Lenkrad 1 abgewandten Ende ein kegelförmiges Zahnrad 7 auf, welches mit einem an einem Ende der Welle 4 angeordneten kegelförmigen Zahnrad 8 in Eingriff steht. Die das Umlenkgetriebe 5 bildenden Zahnräder 7 und 8 sind derart ausgelegt, dass das Umlenkgetriebe ein Übersetzungsverhältnis von 1 aufweist.

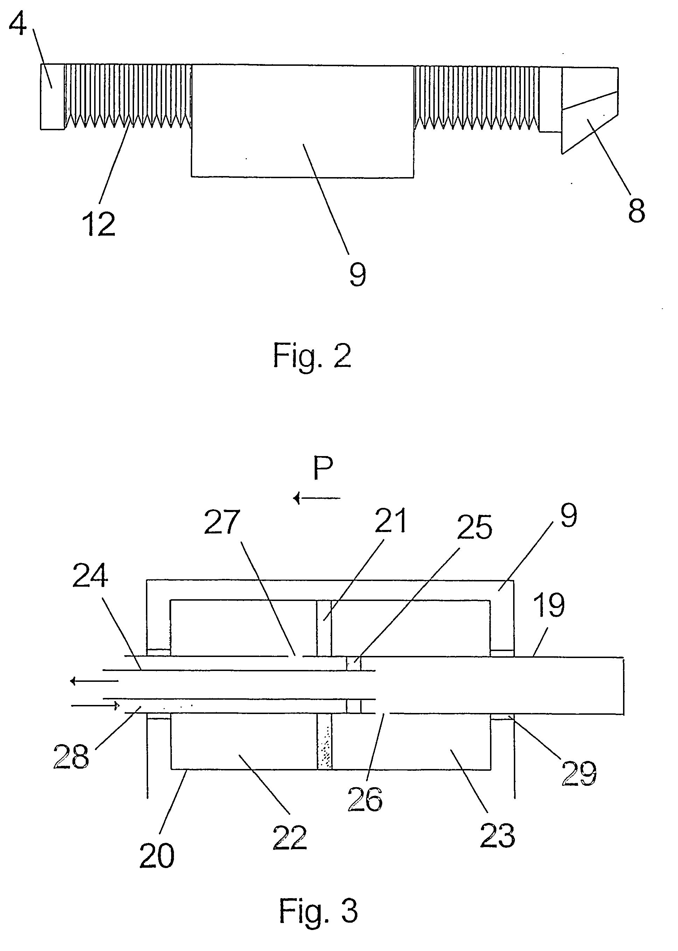

Die senkrecht zu der Lenkwelle 2 ausgerichtete Welle 4 erstreckt sich durch eine in einem Schlitten 9 ausgebildete Bohrung 9a hindurch, in welcher mehrere Kugeln 10 drehbar angeordnet sind. Die Kugeln 10 sitzen in in dem Schlitten 9 ausgebildeten Vertiefungen 11 und greifen in eine an der Oberfläche der Welle 4 ausgebildete Spiralnut 12 (siehe Fig. 2) ein. Die Welle 4 mit der Spiralnut 12 bildet zusammen mit den Kugeln 10 und dem Schlitten 9 einen Gewindetrieb, der eine Rotationsbewegung der Welle 4 in eine geradlinige Bewegung des Schlittens 9 umsetzt. Da die Welle 4 über das Umlenkgetriebe 5 und die Lenkwelle 2 mit dem Lenkrad 1 verbunden ist, wird auch die Drehbewegung des Lenkrads in eine Linearbewegung des Schlittens 9 umgesetzt.

Mittig an dem Schlitten 9 sind über Kugelgelenke 13 und 14 zwei Spurstangen 15 und 16 befestigt, welche sich bis zu den beiden Rädern 17 und 18 einer Radachse A erstrekken. Über diese gestrichelt dargestellte Verbindung der Spurstangen 15 und 16 mit der Rädern 17 und 18 lässt sich deren Einschlagwinkel durch eine Drehung des Lenkrads 1 einstellen bzw. verändern.

Der Schlitten 9 wird ferner von einer parallel zu der Welle 4 ausgerichteten und am Fahrzeugrahmen 3 befestigten Stange 19 durchgriffen, welche in einer in dem Schlitten 9 ausgebildeten Bohrung 20 einen Kolben 21 mit einem größeren Durchmesser als die Stange 19 aufweist. Der Kolben 21 liegt flüssigkeitsdicht an der Wandung der Bohrung 20 an und schließt mit den Stirnseiten der Bohrung 20 zwei Arbeitskammern 22 und 23 ein. Ferner ist die die Stirnseiten der Bohrung 20 durchgreifende Stange 19 in diesen flüssigkeitsdicht gelagert. Über in der Stange 19 ausgebildete Zuleitungen kann ein Hydraulikmittel in jede der Arbeitskammern bzw. Arbeitsräume 22, 23 eingebracht oder aus jeder der Arbeitsräume 22, 23 abgelassen werden.

Wenn der Schlitten 9 in Richtung des Pfeils P bewegt werden soll, wird die Arbeitskammer 22 mit dem Hydraulikmittel beaufschlagt, wohingegen das Hydraulikmittel aus der Arbeitskammer 23 entweichen kann. Aufgrund des zwischen den Kammern 22 und 23 vorhandenen Druckunterschieds, wirkt eine Kraft auf den Schlitten 9 in Richtung des Pfeils P, welche die von dem Fahrzeugführer durch Drehen des Lenkrads 1 veranlasste Bewegung des Schlittens 9 in Richtung des Pfeils P unterstützt. Soll nun der Schlitten 9 entgegen der Richtung des Pfeils P bewegt werden, so wird die Arbeitskammer 23 mit Hydraulikmittel gefüllt, wohingegen das Hydraulikmittel aus der Arbeitskammer 22 entweichen kann. Der Kolben 21 ist gemäß dieser Ausführungsform feststehend, so dass ein zwischen den Kammern 20, 21 bestehender Druckunterschied sich nur hinsichtlich einer Bewegungsunterstützung des Schlittens 9 auswirken kann.

Aus Fig. 2 ist eine Seitenansicht der Welle 4 ersichtlich, welche nur zur Hälfte bis zu ihrer Längsachse dargestellt ist. Deutlich ist das Gewinde bzw. die Spiralnut 12 erkennbar, in welche die aus Fig. 1 ersichtlichen Kugeln 10 eingreifen. Über die Steigung des Gewindes 12 kann dabei das Übersetzungsverhältnis des Gewindetriebs eingestellt werden.

Aus Fig. 3 ist eine schematische Darstellung der hydraulischen Kraftunterstützung gemäß der Ausführungsform ersichtlich. In der einseitig verschlossenen, hohlen Stange 19 ist ein Rohr 24 konzentrisch angeordnet, welches sich nur über einen Teil der Länge der Stange 19 erstreckt und gegenüber dieser mittels einer Dichtung 25 flüssigkeitsdicht abgedichtet ist. Auf beiden Seiten des Kolbens 21 ist jeweils ein Loch 26, 27 in der Stange 19 vorgesehen, wobei das Loch 26 einen Durchgang zu der Arbeitskammer 23 und das Loch 27 einen Durchgang zu der Arbeitskammer 22 bildet. Die Dichtung 25 ist zwischen diesen beiden Löchern 26, 27 angeordnet, so dass durch das Rohr 24 Hydraulikflüssigkeit in die Arbeitskammer 23 und durch den zwischen dem Rohr 24 und der Stange 19 gebildeten Ringspalt 28 Hydraulikflüssigkeit in die Arbeitskammer 22 eingebracht werden kann. Soll der Schlitten 9 z. B. in Richtung des Pfeils P bewegt werden, so wird durch den Ringspalt 28 der Kammer 22 Hydraulikflüssigkeit zugeführt, wohingegen durch das Rohr 24 Hydraulikflüssigkeit aus der Kammer 23 abgelassen wird. Soll der Schlitten 9 aber in die entgegengesetzte Richtung bewegt werden, so wird durch das Rohr 24 der Kammer 23 Hydraulikflüssigkeit zugeführt, wohingegen durch den Ringspalt 28 Hydraulikflüssigkeit aus der Kammer 22 abgelassen wird. Der Schlitten 9 ist dabei gegenüber der Stange 19 mit Dichtungen 29 flüssigkeitsdicht abgedichtet.

### Bezugszeichenliste

- 1: Lenkrad
- 2: Lenkwelle
- 3: Fahrzeugrahmen
- 4: Welle
- 5: Umlenkgetriebe
- 6: Lager
- 7,8: kegelförmige Zahnräder
- 9: Schlitten
- 9a: Bohrung
- 10: Kugeln
- 11: Ausnehmungen
- 12: Spiralnut
- 13, 14: Kugelgelenk
- 15, 16: Spurstange
- 17, 18: Räder
- 19: Stange
- 20: Bohrung
- 21: Kolben
- 22, 23: Arbeitskammern
- 24: Rohr
- 25, 29: Dichtung
- 26, 27: Löcher
- 28: Ringspalt
- A: Radachse
- P: Pfeil

## Patentansprüche

1. Lenkung für ein Kraftfahrzeug, mit
einer drehbar am Fahrzeugrahmen (3) gelagerten Welle (4),
einem mit der Welle (4) verbundenen und entlang dieser bewegbaren Schlitten (9) und
zwei an dem Schlitten (9) befestigten und sich bis zu den Rädern (17, 18) einer Achse (A) erstreckenden Spurstangen (15, 16), wobei
der Schlitten (9) mit der Welle (4) über einen Gewindetrieb verbunden ist, **dadurch gekennzeichnet, dass**
der Schlitten (9) von einer zu der Welle (4) parallelen und an dem Fahrzeugrahmen (3) befestigten Stange (19) durchgriffen und entlang dieser bewegbar ist.

2. Lenkung nach Anspruch 1 , **dadurch gekennzeichnet, dass** der Gewindetrieb ein Kugelgewindetrieb (10, 11, 12) ist.

3. Lenkung nach Anspruch 1 oder 2, **dadurch gekennzeichnet, dass** die Welle (4) mit einer Lenkwelle (2) über ein Umlenkgetriebe (5) verbunden ist.

4. Lenkung nach einem der vorangehenden Ansprüche , **dadurch gekennzeichnet, dass** die Spurstangen (15, 16) mittig an dem Schlitten (9) befestigt sind.

5. Lenkung nach einem der vorangehenden Ansprüche, **dadurch gekennzeichnet, dass** die Lenkung mit einer hydraulischen Kraftunterstützung ausgestattet ist.

6. Lenkung nach Anspruch 5, **dadurch gekennzeichnet, dass** an der Stange (19) ein kolben (21) ausgebildet ist, der in einer in dem Schlitten (9) vorgesehenen und stirnseitig verschlossenen Zylinderbohrung (20) sitzt.

7. Lenkung nach Anspruch 6 , **dadurch gekennzeichnet, dass** die zwischen dem kolben (21) und den Stirnseiten der Zylinderbohrung (20) gebildete Räume (22, 23) über Zuleitungen mit einem Hydraulikmittel befüllbar sind.

8. Lenkung nach Anspruch 7 , **dadurch gekennzeichnet, dass** die Zuleitungen in der Stange (19) ausgebildet sind.

## Claims

1. Steering system for a motor vehicle, comprising:
a shaft (4) rotatably mounted on the vehicle frame (3),
a carriage (9) connected to and movable along the shaft (4), and
two track rods (15, 16) secured to the carriage (9) and extending to the wheels (17, 18) of an axle (A),
the carriage (9) being connected to the shaft (4) via a threaded drive, **characterised in that**
the carriage (9) has passing through it and is movable along a rod (19) parallel to the shaft (4) and secured to the vehicle frame (3).

2. Steering system according to Claim 1, **characterised in that** the threaded drive is a ball screw (10, 11, 12).

3. Steering system according to Claim 1 or 2, **characterised in that** the shaft (4) is connected to a steering shaft (2) via a deflection gear (5).

4. Steering system according to one of the preceding claims, **characterised in that** the track rods (15, 16) are centrally secured to the carriage (9).

5. Steering system according to one of the preceding claims, **characterised in that** the steering system is provided with hydraulic power assistance.

6. Steering system according to Claim 5, **characterised in that** a piston (21) is formed on the rod (19), the piston being seated in a cylinder bore (20) provided in the carriage (9) and closed off at the end sides.

7. Steering system according to Claim 6, **characterised in that** the spaces (22, 23) formed between the piston (21) and the end sides of the cylinder bore (20) can be filled with a hydraulic medium via feed lines.

8. Steering system according Claim 7, **characterised in that** the feed lines are formed in the rod (19).

## Revendications

1. Direction pour un véhicule automobile, avec
un arbre (4) rotatif monté sur le châssis (3) du véhicule,
un coulisseau (9) relié à l'arbre (4) et déplaçable le long de celui-ci et deux barres d'accouplement (15, 16) fixées sur le coulisseau (9) et s'étendant jusqu'aux roues (17, 18) d'un essieu (A),
le coulisseau (9) étant relié à l'arbre (4) par le biais d'une vis d'entraînement, **caractérisée en ce que**
le coulisseau (9) est pénétré par une barre (19) parallèle à l'arbre (4) et fixée au châssis (3) du véhicule et est déplaçable le long de celle-ci.

2. Direction selon la revendication 1, **caractérisée en ce que** la vis d'entraînement est une vis d'entraînement à billes (10, 11, 12).

3. Direction selon la revendication 1 ou 2, **caractérisée en ce que** l'arbre (4) est relié à un arbre de direction (2) par le biais d'une transmission de renvoi (5).

4. Direction selon l'une quelconque des revendications précédentes, **caractérisée en ce que** les barres d'accouplement (15, 16) sont fixées au centre du coulisseau (9).

5. Direction selon l'une quelconque des revendications précédentes, **caractérisée en ce que** la direction est équipée d'une assistance hydraulique.

6. Direction selon la revendication 5, **caractérisée en ce qu'**un piston (21) est conçu sur la barre (19), lequel piston est situé dans un alésage de cylindre (20) prévu dans le coulisseau (9) et fermé sur la face.

7. Direction selon la revendication 6, **caractérisée en ce que** les espaces (22, 23) formés entre le piston (21) et les faces de l'alésage du cylindre (20) peuvent être remplis avec un liquide hydraulique par le biais de conduites d'alimentation.

8. Direction selon la revendication 7, **caractérisée en ce que** les conduites d'alimentation sont ménagées dans la barre (19).
